# EUROPEAN PATENT SPECIFICATION

(11) **EP 1 055 263 B1**
(45) Date of publication and mention of the grant of the patent: **12.04.2006**
(21) Application number: 99903877.1
(22) Date of filing: 11.02.1999
(51) Int. Cl.: H01M 10/52, H01M 2/12

(54) **THE USE OF CATALYSTS IN STANDBY VALVE-REGULATED LEAD ACID CELLS**
VERWENDUNG VON KATALYSATOREN IN VENTILGEREGELTEN STAND-BY BLEISÄURE ZELLEN
EMPLOI DE CATALYSEURS DANS DES ACCUMULATEURS DE RESERVE AU PLOMB-ACIDE

(30) Priority: 11.02.1998 US 22336
(43) Date of publication of application: 29.11.2000
(73) Proprietor: JONES, William E. M., Freeport (BS)
(72) Inventor: JONES, William, E., M., Freeport, The Bahamas (BS); VANASSE, Harold, A., West Chester, PA 19380 (US); CLAPPER, Joshua, Westchester, PA 19380 (US); SABOTTA, Christian, E., Collegeville, PA 19426 (US); PRICE, Edward, F., Wyomissing, PA 19610 (US)
(74) Representative: Callies, Rainer Michael
(86) International application number: PCT/IB1999/000364
(87) International publication number: WO 1999/041798

(56) References cited:
- WO-A-97/15958
- WO-A-98/21766
- DE-A- 2 904 842
- GB-A- 871 605
- US-A- 3 832 238
- US-A- 4 002 496
- US-A- 4 074 024
- PATENT ABSTRACTS OF JAPAN vol. 013, no. 031 (E-707), 24 January 1989 & JP 63 231882 A (SANYO ELECTRIC CO LTD), 27 September 1988
- MASASHI IWATA ET AL: "TECHNICAL TRENDS IN INDUSTRIAL LEAD/ACID BATTERIES IN JAPAN" JOURNAL OF POWER SOURCES, vol. 48, no. 1/02, 19 February 1994, pages 55-67, XP000485205

## Description

### BACKGROUND

### 1. Field of the Invention

The present invention relates to the use of catalysts for improving the service life of valve regulated lead acid (VRLA) cells in standby service, and to a catalyst device therefor which may also be applicable to other types of batteries where it is desirable to recombine excess oxygen with hydrogen produced in the battery cell.

### 2. Related Art

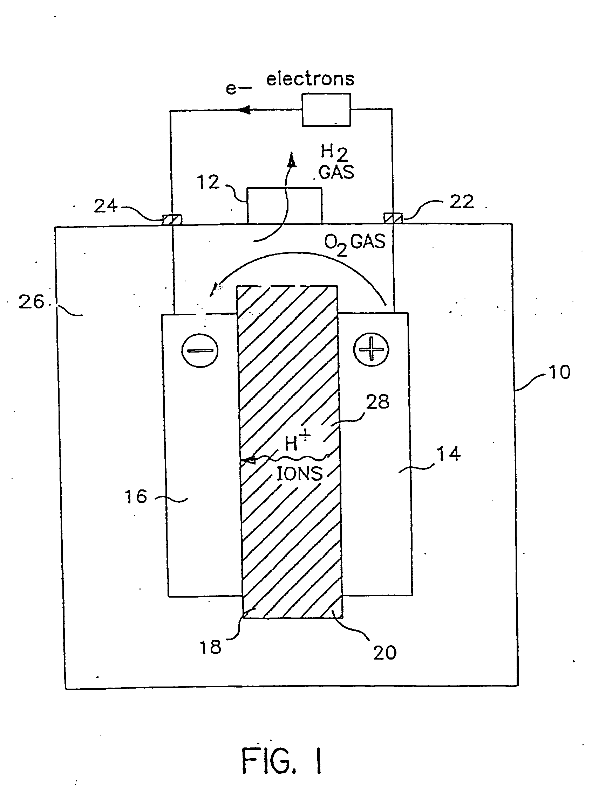

The construction of a VRLA cell is shown schematically in Figure 1. Like the traditional flooded cell, it has at least two electrodes or plates: a positive plate and a negative plate. Each of these plates is made of a current-collecting grid and an energy-storing active material. The VRLA cell differs, however, from the flooded cell in two ways.

First, the plates, instead of being immersed in a liquid bath of electrolyte, are sandwiched in an immobilized electrolyte which provides gas channels between the plates for the transport of oxygen. In one type of VRLA cell, the electrolyte is immobilized in sponge-like separators which are made usually from absorbent glass fiber. Most of the electrolyte is absorbed in these separators. This type of VRLA cell is called the "absorptive glass mat" type, or AGM cell. Another exemplary type of VRLA cell is the "gel cell" in which liquid electrolyte of the type used in a conventional flooded cell is replaced by a gelled electrolyte. The present invention applies also to this type of VRLA cell. A third type of valve regulated cell that uses liquid electrolyte has been contemplated and is the subject of U.S. Patent Application No. 08/738,160 which is hereby incorporated by reference. This new type of cell has been termed a "semi-flooded" cell to be distinguished from the flooded cell and the conventional VRLA cells. The present invention is believed to apply to this type of cell as well and other types of cells where recombination of excess oxygen and hydrogen is desired. However, for the sake of clarity, the following description will be in terms of the AGM cell only.

A second difference between the VRLA cell and the flooded cell is that the flooded cell is vented to the atmosphere through a simple orifice, whereas the VRLA cell is vented through a one-way valve. The purpose of the one-way valve is to allow gas to escape from the cell to prevent over-pressurizing of the cell and prevent ingress from the air of oxygen that would oxidize and, therefore, discharge the negative plate. (Note that the negative plate of a flooded cell is protected by submersion in the acidic electrolyte, but the negative plate of the VRLA cell is exposed and very vulnerable to free oxygen in the cell).

As in any lead-acid cell on charge, oxygen is produced on the positive plate; some of this oxygen corrodes the positive grid. This is a fundamental characteristic of the lead acid cell and cannot be avoided.

The rate of corrosion of the positive grid is one of the two critical reactions that, in a VRLA cell, must be balanced or compensated for to avoid problems of short service life. This rate depends on the cell design. For example, two thin grids will corrode faster than a single thick grid of the same capacity due to their larger surface area. Different alloys also have differing rates of corrosion.

The negative grid is protected cathodically and does not normally corrode. However, the material comprising the negative electrode plays a major role in the design of the cell because it has an inherent tendency to self-discharge if the cell is left on open circuit. Such discharge is accompanied by the formation of hydrogen. The rate of the self-discharge reaction represents the second critical reaction in a VRLA cell that must be balanced to avoid service problems.

To the battery user, the VRLA cell has important advantages over a conventional flooded cell. One advantage is that the electrolyte, which is immobilized by the glass mat separators, cannot leak out of the cell even if the case or housing is punctured or inverted. Another advantage is that the cell has a reduced water consumption and, therefore, lower associated maintenance costs.

VRLA cells have been very successful in replacing conventional "flooded" cells in many standby applications such as, for example, a source of uninterruptable power supplies in telephone and computer systems. Much of this success is due to the claims by the manufacturers that the VRLA cells will provide a full 20-years of service without requiring water addition of any kind.

There is, however, evidence which has been collected from extensive laboratory testing over a two-year period that indicates that such claims may be overly optimistic. This is especially true at higher operating temperatures such as, for example, 90°F (32°C) at which many of the VRLA cells tend to fail in much shorter time periods. This problem is described in more detail below.

First, and by way of background, it is noted that the VRLA cell operates on a well-known principle called the "oxygen cycle" which gives the cell its ability to operate at reduced levels of water consumption. Figure 1 shows schematically a VRLA cell on charge. The oxygen gas produced by the positive plate, instead of bubbling to the surface of the electrolyte and leaving the cell as it would do in a flooded cell, penetrates the glass mat separator and comes into direct contact with the negative plate. (For example, a major portion of the oxygen gas so produced can migrate from the positive to the negative plate.) The result is the immediate "depolarization" of the negative plate, that is, a reduction in the voltage of the negative plate to approximately its open-circuit value.

This lower voltage causes the negative plate to produce less hydrogen so, in effect, the oxygen cycle suppresses the quantity of hydrogen produced. However, it does not eliminate the production of hydrogen (as may be erroneously believed), but reduces it to the minimum value possible, namely, the open-circuit value, for example, about 20 to about 80 cc/day/100 ampere hours (at 30°C).

On the negative plate surface, the oxygen recombines with hydrogen ions from the electrolyte (plus the necessary electrons which are not shown for the sake of clarity) to reform water. Thus, the cell has a much reduced level of water consumption.

On the basis of this model, the industry has produced millions of VRLA cell for a multitude of applications. In many of these applications, the cells are operating successfully and are well accepted by their users. Surprisingly, however, in some commercial applications, high quality, heavy duty cells are demonstrating a serious problem of reduced capacity and short life. Such cells include those that have been designed for long-life by equipping them with highly corrosion-resistant positive grids. The extent of the problem is that cells designed for 20 years of service life may fail (defined as 80% or less capacity) in as little as 5 years or even less.

Various battery manufacturers have tended to assign the blame for such failures, including failures which have been observed in the field, to manufacturing defects or customer abuse. Research has shown that there are other reasons for the failures, as the failures have tended to continue.

The present invention relates to improvements in the design of and operation of VRLA cells, and is applicable to other types of battery cells where it is desirable to recombine oxygen.

### WO 97115958 A1:

This patent document, to the same applicant hereof, is for a new type of battery cell termed a "semi-flooded" battery cell. Unlike a conventional flooded lead acid cell, the semi-flooded cell contains a pressure relief valve similar to those used in conventional valve regulated lead acid cells (VRLA cells) and exposes the negative electrode in a gas space above the liquid electrolyte. Use of a catalyst is contemplated to provide additional benefits in addition to those provided by exposing the electrode to the gas space.

### U.S. Patent 3 832 238 (Marui et al.):

Marui et al. disclose a gas recovery device which is used with non-valve regulated batteries and which is mounted externally on batteries.

### SUMMARY OF THE INVENTION

There is provided a method for charging a valve-regulated, lead-acid (VRLA) cell at a charge voltage which has a value that is slightly in excess of the value of the open-circuit voltage of the cell. The cell includes, in spaced relationship, a positive electrode and a negative electrode, and sandwiched therebetween electrolyte-containing separator means in which electrolyte is contained, wherein, during charging of the cell, there is produced at the positive and negative electrodes respectively oxygen gas and hydrogen gas in a predetermined amount, a portion of the oxygen gas tending to migrate through the electrolyte-containing separator means to the negative electrode and cause depolarization thereof, and wherein there is also formed at the positive electrode hydrogen ions which migrate to the negative electrode to form hydrogen gas in an amount less than said predetermined amount, the negative electrode tending to discharge over a prolonged period of time during charging. The improvement comprises inhibiting the tendency of the negative electrode to discharge during charging by controlling the amount of oxygen gas in the cell by catalytically converting a portion of the oxygen gas and a portion of the predetermined amount of hydrogen gas to water.

In accordance with the present invention, there is provided an electrical cell as defined by the features of claim 1. The cell has a sealed housing and a gas space within. Positioned in the housing is a positive electrode and a negative electrode spaced from one another. An electrolyte is in contact with the positive and negative electrodes. A pressure relief valve allows gas to escape from the housing and prevents oxygen gas from outside the housing to contact the negative electrode. Positioned to be in gas communication with the gas space in the housing is a catalyst for converting oxygen gas and hydrogen gas which is generated in the housing to water.

A catalyst device that has a gas-permeable catalyst container is positioned in the cell to be in communication with the gas within. The container comprises a flame arresting material having pores of suitable size to permit gas to pass through the pores while being a barrier to a flame. The container is encased in a gas-permeable hydrophobic coating to prevent liquids from passing through. Arranged in the catalyst container is the catalyst for converting oxygen gas and hydrogen gas to water. The catalyst device can be combined with a pressure relief valve to be easily insertable into and removable from the sealed battery housing.

The invention further provides devices defined by claims 7 and 16, and vent assemblies defined by claims 17 and 24,

The development of the present invention stems from tests which indicate that industrial quality VRLA cells have a general problem in standby float service. The problem is that they lose capacity continuously - even while on charge. Further, the problem is independent of the manufacturer of the cells and of the processes by which the cells are made. As mentioned above, cells that have been designed for twenty years of service life are failing in as few as five years or in even a fewer number of years. It should be appreciated from the following detailed description of the present invention that the present invention provides an improved cell which overcomes the aforementioned type of problems that are associated with the prior art VRLA cells. The use of a catalyst with VRLA cells provides benefits which include:
1) reducing the amount of oxygen that reaches the negative electrode, thereby allowing the negative electrode to polarize slightly;
2) reduces the water loss of the cell; and
3) reduces the float current needed for each cell.

### BRIEF DESCRIPTION OF THE DRAWINGS

Figure 1 shows a schematic cross-sectional view of a VRLA cell;
Figure 2 shows a schematic cross-sectional view of the gas and ion flow in a balanced VRLA cell;
Figure 3 shows a schematic cross-sectional view of the gas and ion flow in an unbalanced VRLA cell;
Figure 4 shows a bar graph depicting the relative gas emissions from conventional VRLA cells (left) and VRLA cells equipped with catalysts (right);
Figure 5 shows a schematic cross-sectional view of VRLA cell equipped with a catalyst;
Figure 6 shows a cross-sectional view of a preferred catalyst device for use with VRLA cells.
Figure 7 shows a perspective view of a vent assembly for VRLA cells combining a pressure relief valve and the catalyst device shown in Figure 6;
Figure 7A shows a perspective view of the pressure relief valve section of the combined assembly shown in Figure 7;
Figure 7B shows a side view of the catalyst cage section of the combined assembly shown in Figure 7;
Figure 8 shows a perspective view of another embodiment of a vent assembly for VRLA cells using the catalyst device shown in Figure 6;
Figure 8A shows a cross-sectional view of the assembly shown in Figure 8; and
Figure 8B shows a cross-sectional view of the vent body shown in Figure 8.

### DETAILED DESCRIPTION OF THE INVENTION

### A. Use of Catalyst

With reference to Figure 1, the VRLA cell of the present invention has a sealed housing 10 which is provided with a pressure relief (one-way) valve 12. A positive electrode 14 having an active material is positioned within the housing 10. A negative electrode 16 having an active material is also positioned in the housing and in spaced relationship from the positive electrode. Such electrodes are typically in the form of plates. Electrolyte-containing separator means 18 are sandwiched between the positive and the negative electrodes and contained in the separator means is electrolyte 20. Virtually all of the electrolyte is contained in the separator means, there being no "free" electrolyte in the cell.

It is believed that the VRLA cells that will be used most widely will include the following: a positive electrode comprising a conductive material such as a lead alloy, preferably a lead-calcium alloy, and an active material comprising PbO₂; a negative electrode comprising lead, preferably finely divided particles of substantially pure lead, referred to in the industry as "sponge lead"; and an electrolyte of dilute sulfuric acid.

The positive and negative electrodes 14 and 16 are connected electrically to positive and negative terminals 22 and 24, typically by straps, as they are commonly referred to in the art.

A gas space 26 in the housing is defined by the inside walls of the housing, the positive and negative electrodes, and the separator means.

The VRLA cell is typically charged on a continuous basis and over a long-term, for example, in excess of five years. The word "continuous" as used herein in connection with the charging of the cell is intended to mean an uninterrupted flow of current, as well as an intermittent flow of current, for example, a pulsating current.

As mentioned above, a VRLA cell in accordance with the present invention is charged at a voltage having a value that is slightly in excess of the value of the open-circuit voltage of the cell which, for example, is typically about 2.15 volts. The term "slightly in excess" means a value no greater than about 0.3 volt above the open circuit voltage of the cell in applications in which there is an intermittent flow of current. In applications in which the flow of current is uninterrupted during charging, it is preferred that the charge voltage have a value that is no greater than about 0.2 volt above the open-circuit voltage of the cell.

In work leading to the development of the present invention, extensive investigations have led to the conclusion that the designs of prior art VRLA cells have produced cells that are electrochemically "out of balance". An explanation follows.

There are two fundamental reactions which govern the production of hydrogen in a VRLA cell. They are: (1) corrosion of the positive grid; and (2) self-discharge of the negative active material. The corrosion of the positive grid produces hydrogen ions 28 which migrate to the negative electrode 16 where they recombine with electrons from the external circuit to form hydrogen gas. The hydrogen gas so formed emanates from the negative electrode 16. Simultaneously, with the production of such hydrogen gas, the negative electrode 16 is also producing hydrogen gas by an independent, self-discharge chemical reaction. To keep the negative electrode charged fully, therefore, there must be formed an amount of hydrogen gas from the ions and electrons that migrate from the positive electrode that is equal to the amount of hydrogen gas that is lost by the self-discharge reaction.

If the aforementioned two reactions produce exactly the same equivalent amount of hydrogen, the cell is in perfect balance, that is, if the hydrogen ions 28 (formed by positive grid corrosion) are capable of forming an amount of hydrogen gas precisely equivalent to the amount of gaseous hydrogen formed by discharge of the negative plate, the cell is balanced.

Inside such a balanced cell, no excess oxygen is generated to cause discharge of the negative electrode 16. The cell will, theoretically, keep its capacity until it dries out or fails from some other normal condition. In that sense, the balanced cell might appear to be the perfect VRLA cell. Such a perfectly balanced cell can be made, but the difficulty is to make a balanced cell that has a long life, for example about 15 to about 20 years.

Consider that the rate of corrosion of the positive grids has to be quite high in order to produce enough hydrogen ions 28 to balance the rather large amount of hydrogen gas leaving the negative electrode. This can be accomplished by making a cell with thin plates which, however, will have a relatively short life. The irony is that, if a deliberate effort is made to improve the life of such a cell by improving the corrosion-resistance of the positive grid, the cell will promptly become unbalanced in a relatively short period of time and the life of that cell will become worse, not better by virtue of the discharge of the negative electrode. The relatively thick positive grids made with a corrosion resistant alloy will produce much less hydrogen than needed to counter normal negative plate discharge.

Cells having relatively high corrosion-resistant positive grid are presently being manufactured and sold. Investigations have shown that one such cell had a measured imbalance of 5:1, that is, the amount of hydrogen formed by hydrogen ions that migrated from the positive electrode was only one fifth the amount required to support the negative at full charge. Other tests have shown such ratios as high as 7:1.

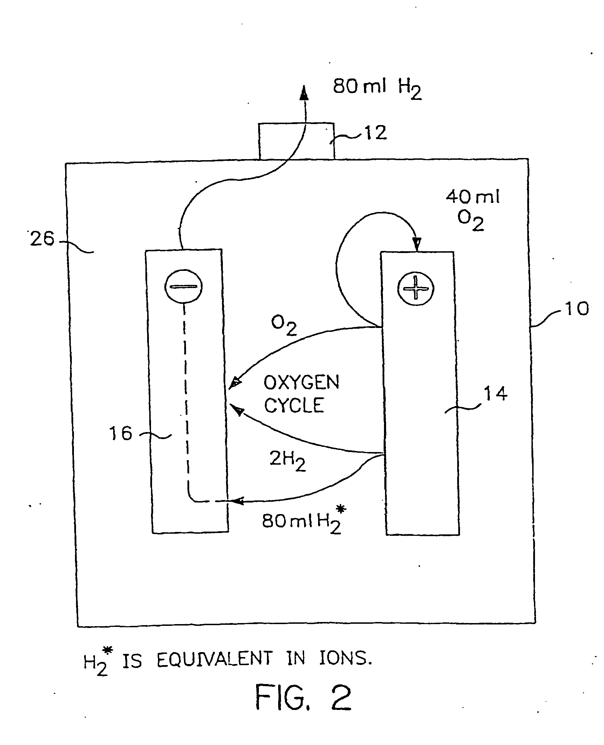

Figure 2 shows a diagram of the gas and ion flow in a hypothetically balanced VRLA cell with a nominal 100 ampere hour capacity. The amount of hydrogen given off by the negative plate is measured at 80 ml/day. The formation of oxygen production is explained as follows. In Figure 2, oxygen used up in the corrosion reaction is assumed to be 40 ml per day. Since that oxygen is removed from the water in the cell, the corresponding hydrogen ions which leave the positive plate on route to the negative plate is, therefore, equivalent to 80 ml/day of hydrogen gas. (More precisely, the ions will turn into that amount of gas when they reach the negative plate). This amount of hydrogen gas is equivalent to the amount of hydrogen gas given off by the negative plate. Accordingly, the cell is balanced.

The other reactions marked "oxygen cycle" in Figure 2 do not produce any excess gases of any kind and so can be ignored in this analysis.

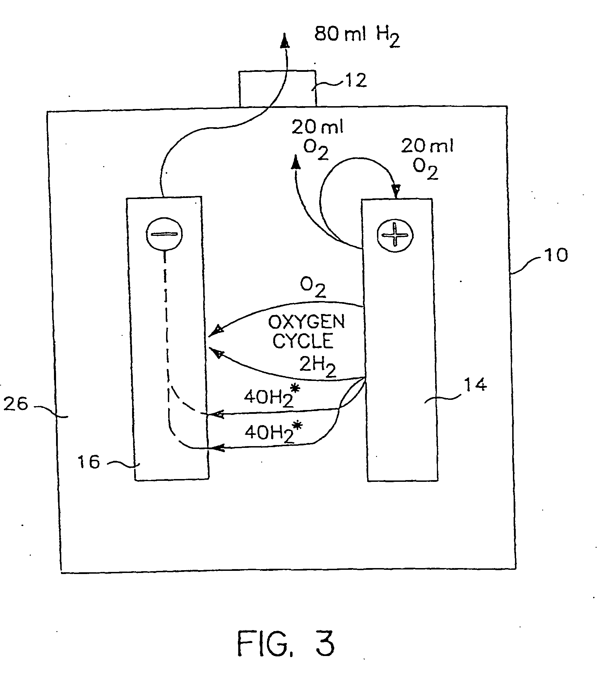

Figure 3 shows a similar flow diagram for an unbalanced cell of the same 100 ampere hour capacity. In this case, the corrosion-resistance of the positive grid is four times better than in the example of Figure 2, so only 10 ml of oxygen per day are consumed in the reaction. The hydrogen ions left over from the corrosion of the positive grid equates to only 20 ml per day, that is, a quarter of that necessary to provide the 80 ml/day of hydrogen gas emitted from the negative plate. This means that the negative plate will discharge chemically to lead sulfate and water. Not only will the negative plate discharge, but it will discharge quite rapidly - namely, at three quarters of the open-circuit rate. In other words, it will discharge almost as fast as if it were not being charged at all.

Conventional wisdom would indicate that the cell voltage and charging current must be raised to protect the negative electrode from discharging. However, inasmuch as the positive plates are already being over-charged (the positive polarization is typically 120 mV in an AGM cell versus a typical polarization of only about 50 to about 80 mV in a flooded cell), raising the voltage further would reduce the life of the positive grid and undesirably raise cell temperatures.

The cause of the problem with present long life VRLA cells is, therefore, a fundamental one. If the positive grids are made to last a long time by being fabricated from highly corrosion-resistant materials, the cell will not generate sufficient hydrogen ions (plus electrons) to keep the negative electrodes charged and effective. The VRLA cell, therefore, has a self-destructive tendency that is more pronounced as the corrosion-resistance of the positive grid improves.

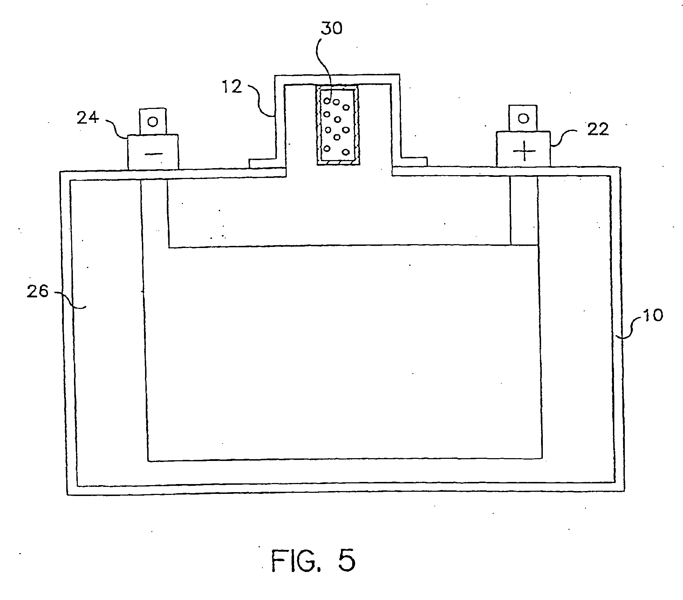

To cope with the problem of the intrinsic unbalance of the cell with the resultant discharge of the negative plate, the present invention provides means for coping with "excess" oxygen in the cell, for example, a portion of the oxygen from the oxygen cycle is prevented from reaching the negative plate. With reference to Figure 5, such means can include a recombination catalyst 30 positioned in the gas space 26 of the VRLA cell in order to remove the "excess" oxygen by recombining it with the hydrogen gas that is always available in VRLA cells of long-life design.

The preferred catalyst material is 0.5% palladium deposited on alumina or carbon. Other catalysts can be used, for example, other available catalysts of the platinum group, tungsten carbide, or even hot wires such as used by Edison in 1913. The catalyst should be positioned in communication with the gas space 26 of a VRLA cell and reliably recombine hydrogen and oxygen gases in the relatively small amounts that are present.

The detail of the design of the catalyst 30 and its location in the cell should take into account factors that are well known in the art. For example, the catalyst 30 should be protected preferably from acid spray from the electrolyte. An advantage of the use of catalysts in VRLA cells is that the density of the acid used in such cells is typically 1.300 instead of the more usual 1.225 density of the acid used in a flooded cell. This makes the atmosphere in the cell dryer and acts to dry out the catalyst if it gets wet with the water that is formed by virtue of the catalyst being present. In short, conventional catalysts will suffice to gain the benefits described here.

It is preferred to position the catalyst in the pressure relief (one-way) valve 12 (see Figure 5) so that it can be inserted into and removed from the cell easily. In a preferred embodiment, the catalyst is in the form of pellets held in a porous ceramic container 30.

Alternatively, the catalyst can be positioned in a catalyst housing that is separate from the pressure relief valve.

The embodiment of Figure 5 shows a single cell positioned in the housing. It should be understood that the present invention contemplates a plurality of cells positioned in the housing.

The use of a catalyst in a VRLA cell in accordance with the present invention is to be distinguished from the use of a catalyst in a conventional flooded cell which is on charge. By way of background, it is noted that, according to Faraday, one ampere hour generates 418 mL of hydrogen and 209 mL of oxygen at standard temperature and pressure (STP). In a flooded cell, especially at high charging rates, most of this gas escapes the cell. However, in order to reduce water consumption, a catalyst can be used to convert the relatively large amount of gas to water by recombining substantially all of the gases. Basically, the catalyst is used in the flooded cell to recombine into water the bulk oxyhydrogen gas created at the electrodes by the charge current.

In practice, this requires large catalytic devices and the generation of a great deal of heat. For example, a large, 600 ampere hour, fork-lift truck cell may be charged at 30 amps. A catalyst recombining the resultant gasses will have to dissipate about 50 watts - the power of an electric light bulb - on each cell.

In contrast to the conventional flooded cell, a VRLA cell is quite different. For example, the VRLA cell is inherently a "recombinant" cell which functions in a manner such as to minimize water loss caused by electrolysis. The oxygen cycle in the VRLA cell is achieved by the cell itself with an efficiency of 95% or more. This means that use of the catalyst in accordance with the present invention recombines a relatively small amount of the H₂/O₂ produced in the cell, for example, about 2 to about 8% of the oxygen produced in the cell. Accordingly, the amount of catalyst used in accordance with the present invention is small relative to that needed for a flooded cell and the heat generated at the catalyst much lower. For example, a large, 600 ampere hour, standby VRLA cell may be charged at 0.3 amp or a total of less than 1 watt per cell. Further, about 95% of that power would be absorbed by the oxygen cycle itself leaving only a fraction of the watt of power for the catalyst to dissipate. This is clearly a very different technology than associated with the use of a catalyst in a flooded cell. In short, the primary purpose in using a catalyst in accordance with the present invention is to remove substantially continuously a very small amount of the total oxygen - excess oxygen - from an unbalanced cell design and convert it to water, thereby preventing or deterring discharge of the negative electrode and decreasing the dryout rate of the cell.

The use of a catalyst has also been reported in applications involving VRLA cells in batteries used for operating fork-lift trucks. Such use of the catalyst is like that associated with the aforementioned flooded battery because it involves the recombination of bulk oxyhydrogen gas and the use of different operating parameters than involved in the use of the present invention.

In the fork-lift truck type application, or other deep discharge or "cycling" applications, the battery has to be charged quickly from a state of full discharge so the fork-lift truck can be used in the next shift of work. To charge a battery quickly, the voltage must be raised; this increases the current and overwhelms the cell's natural ability to recombine oxygen gas. As this occurs, the cell begins to electrolyze bulk oxyhydrogen gas just like a flooded cell. In an effort to reduce water consumption, a catalyst could be used to recombine the bulk oxyhydrogen gas, as a catalyst is used in the flooded cell.

Cycling applications of the aforementioned type associated with the charging of a fork-lift truck battery, are clearly distinguishable from the standby (stationary) applications in that the former rely on the use of a relatively high voltage charge. For example, in a cycling or deep discharge application, where a battery is typically charged and discharged every day, charge voltages are usually well above 2.40 volts per cell. Gassing due to electrolysis is high and the use of a catalyst to recombine these gases might, perhaps, be expected. The use of charge voltage as low as 2.35 volts per cell would not be very practical because it would make the recharge time too long.

On the other hand, in a standby application, the standby battery is usually "floated" or charged substantially continuously so the charge voltage is significantly lower than that used in the cycling application. A typical VRLA cell on float charge would be charged at about 2.25 volts per cell. A relatively small amount of gas is generated and the use of a catalyst in such an application would be considered by those skilled in the art as redundant. Floating a VRLA cell continuously at 2.35 volts would reduce its life, but such voltage may be used if the substantially continuous charge involved intermittent short stoppages, for example, pulsating charges.

The examples which follow include descriptions of embodiments of the present invention. Comparative examples are set forth also.

### EXAMPLES

The first two examples are illustrative of problems associated with conventional prior art VRLA cells.

### Comparative Examples C1 and C2

Two high quality VRLA cells that had been floated (charged) continuously and undisturbed for two years at 80°F (26.7°C) were each given a capacity test. Both failed seriously; one yielded 75% capacity while the other yielded only 60% capacity. Reference electrodes in the cells showed that they failed due to limiting capacity of the negative plates, not the positive plates. The negative plates had discharged in a mere two years of service in cells designed for 20 years of life. Since the test itself had done nothing unusual to the cells that would explain such a continuous discharge, it became clear that there was something fundamentally wrong with the design of the conventional prior art cells.

The next example is illustrative of embodiments of the present invention. Comparative embodiments are described above also.

### Example 1

To test the effect of catalysts in long-life VRLA cells, a special test was constructed. Ten cells were installed in a water bath controlled at a constant temperature of 90°F (32.2°C). The cells were charged at various voltages and the gas emitted from each cell was collected in glass containers. Five cells were equipped with catalyst devices in accordance with the present invention (hereafter "the catalyst cells"). The other five cells were left as standard control cells, that is, prior art cells which are hereafter referred to as "the control cells". Reference electrodes were installed into one cell in each set to measure negative plate potentials. The results were impressive. In less than one day, the negative plates on the catalyst cells were polarized. This was evidence that they were not discharging. In contrast, the negative plates on the control cells were at open circuit or a little below, as is typical of such cells, and almost certainly discharging. In addition, it was observed that the charging current dropped on the catalyst cells to less than one-half the value of the control cells. Also gas measurements that were made over many months and at several different charge voltages, showed the gas emissions of the catalyst cells were approximately five times lower than those of the control cells. This implies a five times increase in life to dryout for the catalyst cells. It was observed also that the gas emissions of the control cells were erratic, whereas the gas emissions of the catalyst cells were relatively uniform.

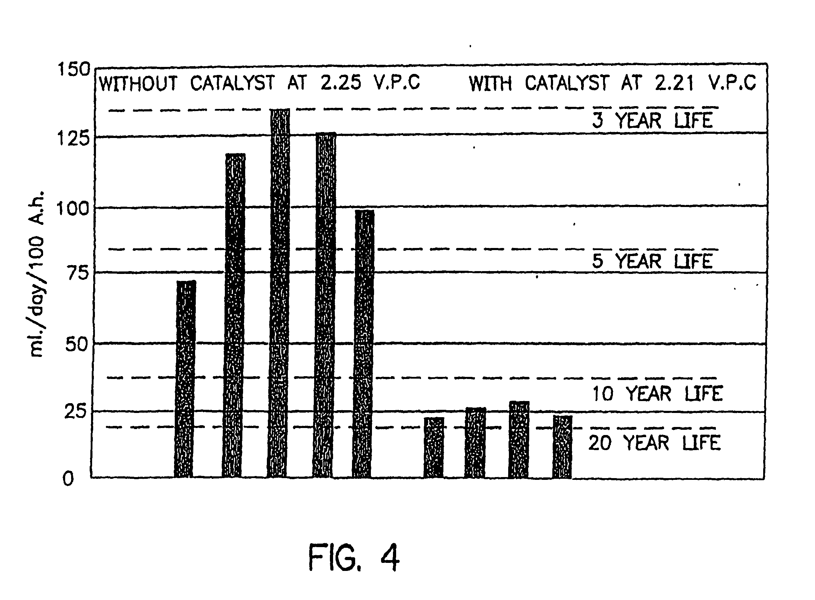

The gas emission results are shown in graphical form in Figure 4 for control cells charges at 2.25 v.p.c. (left side of Figure 4) and for catalyst cells charged at 2.21 v.p.c. (right side of Figure 4). The magnitude of the improvement is difficult to exaggerate. The catalyst cells gassed at rates five times lower than the theoretical minimum possible with the control cell, that is, an unmodified VRLA cell. In view of such results, it is worthy to note that, according to fundamental theoretical constraints, a conventional VRLA cell on charge cannot emit less hydrogen gas than it does on open circuit. (This is widely known as Berndt's Rule). Catalyst cells used in the tests, however, broke through this fundamental barrier and emitted five times less gas than the gas emitted on open circuit. It is believed that the reason for this improvement is that the conventional VRLA cell cannot recombine hydrogen gas while the catalyst cell can.

Such lower level of gassing is defined by another fundamental constraint, that is, the rate of positive grid corrosion. If a catalyst is placed in a conventional unbalanced VRLA cell made with high quality, 20-year life positive grids, it can be expected to last the full twenty years and not be subject to early failure from dryout or negative discharge.

### B. Embodiments Having Preferred Catalyst Device

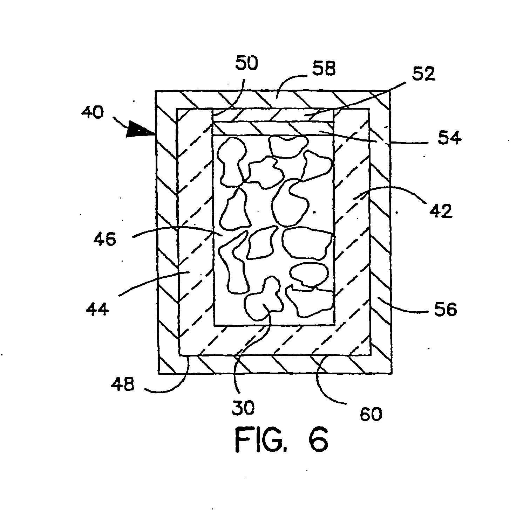

Illustrated with reference to the description above and Figure 6 is a preferable gas recombination catalyst device 40 suitable for use with VRLA cells. The catalyst device 40 has a gas-permeable catalyst container 42 formed of a flame arresting material. The container 42 is cylindrical in shape having a cylindrical wall 44, an interior 46, and an outer surface 48. Suitable materials include ceramics made of alumina-porcelain and alumina-silica having a mesh of micro pores that allow oxygen gas, hydrogen gas, and recombined water vapor to pass through the wall 44, while preventing a flame from passing through the wall 44 which could ignite gases outside the container 42 in the cell housing 10. A 90% alumina-10% porcelain ceramic material heatable to 2000° F (1093.3°C) forming a cylindrical container 42 of about 1 inch (2.54 cm) in diameter, .6 inches (1.52 cm) outside diameter, and a minimum wall thickness of about .10 inches (0.254 cm) with pores of about 40 microns (40 µm) has been found suitable. Other materials such as certain plastics are believed suitable for forming the flame arresting gas-permeable container 42.

Arranged within the interior 46 is the catalyst 30 provided in granular form - .5% palladium on carbon or alumina being preferable. The container 42 is filled with the catalyst 30 through the container opening 50. The amount of palladium (active catalyst material) in the container 42 is preferably about .005 grams, and can range preferably from about .0005 grams to about .025 grams for the typical VRLA cell.

An epoxy 52 suitable for use in the environment of the catalyst device 40 is used to seal closed the container opening 50. A wadding 54 in the opening 50 about 1/16 (0.159 cm) to 1/8 of an inch (0.318 cm) deep holds the epoxy 52 in place while the epoxy cures. The wadding 54 is preferably made of a ceramic paper devoid of any materials, such as organic matter, that could interfere with the function of the catalyst 30.

A gas-permeable hydrophobic coating 56 encases the container 42 to make it impermeable to liquids such as water and sulfuric acid while permitting gas (hydrogen, oxygen and water vapor) to pass through. It is also desirable that the coating 56 be oliophobic, i.e., does not allow oil to pass, as there may be oils within the battery cell such as leachates from the separator which can interfere with the catalyst 30.

A suitable gas-permeable hydrophobic coating 56 is formed by a polytetrafluoroethylene (PTFE) film wrapped around the container 42. Suitable PTFE films include seal tapes of the type having a military specification or 3 mils (0.0076 cm) thickness, .9 g/cc density, 70% elongation; another being a commercial grade of 2.0 mils (0.005 cm) thickness, .22 micron (0.22 µm) pore size. In one embodiment these tapes are applied in a suitable length and width to be wrapped around the container 42 four times and have side ends extending beyond the top and bottom ends 58, 60 of the container 42 which are then twisted and pressed flat against the ends 58, 60 to encase the entire container 42. These tapes are self-adhering to form a liquid tight barrier.

Another method of providing the gas-permeable hydrophobic coating 56 to a container 42 made of ceramic is to lightly coat the outer surface 48 of the ceramic container with a PTFE powder and to sinter the container with the PTFE powder on it in an oven at about 600° F (315.6°C) for about thirty minutes. One possible powder is a fluoroadditive polytetraflouroethylene 9002-34-0 as sold by DuPont.

A third method of providing the coating 56 is to soak a ceramic container 42 in a PTFE based solution. Suitable PTFE solutions include an amorphous fluoropolymer such as TEFLON AF® manufactured by the DuPont Company; a PTFE emulsion in isopropyl alcohol (e.g., KRYTOX DF/IPA® from DuPont); perfluoroalkyl methacrylic copolymer (e.g., ZONYL® 8740 from DuPont); and telomer B phosphate diethanolamine salt (ZONYL® 9027 from DuPont). For these solutions, the container 42 is dipped into the solution and then dried through baking in an oven at a temperature between about 100° to about 120° Celsius. The perfluoroalkyl methacrylic copolymer must then be washed in deionized water to activate the material.

It is understood that the term "encases" as used herein, i.e., "the gas-permeable hydrophobic coating 56 encases the container 42 to make it impermeable to liquids" means that at a minimum, that part of the container 42 which is gas-permeable has the gas-permeable hydrophobic coating 56. For example, the epoxy 52 which is used to seal closed the container opening 50, not being gas-permeable, need not be coated, although from a practical standpoint, i.e., where the coating is applied as a film, applying the film to the entire container 42 to encase the container ensures a liquid-tight coating with less risk of leaks.

In operation, the catalyst device 40 recombines the hydrogen and oxygen gases to form water vapor. Oxygen and hydrogen gas pass through the gas-permeable hydrophobic coating 56 and the gas-permeable catalyst container 42 to the catalyst 30 where it recombines to H₂O vapor which then exits from the device 40 in a similar manner.

The catalyst device 40 is designed to account for certain factors. One such factor is that the catalyst 30 should be protected from liquids. Liquids such as water and aqueous solutions (e.g., sulfuric acid electrolyte) can interfere with the functioning of a catalyst. Aerosol droplets of electrolyte and other forms of liquid may be present within the VRLA cell even when the electrolyte is immobilized. The use of hydrophobic barriers such as PTFE that are permeable to gas form an impermeable barrier to liquids.

Another factor is the energy produced by the chemical reaction on the catalyst. The recombination of oxygen and hydrogen is a highly exothermic reaction capable of producing heat and a flame which can ignite the gases within the battery housing or which can degrade the catalyst. Known catalyst devices used in non VRLA cells as disclosed in U.S. Patent Nos. 3,930,890 and 4,810,598 use heat sinks or the electrolyte to dissipate the heat energy. Another catalyst device, as shown in U.S. Patent 4,002,496 surrounds the catalyst in a gas-permeable vessel which in turn is placed within a condensing vessel in which the condensed water formed by recombination interferes with the in flow of gases to control the rate of reaction and temperature.

As catalysts used with VRLA cells recombine a relatively small amount of H₂/O₂, the amount of heat produced by the exothermic recombination is not believed to present much of a risk of excessive heat and flames. Protecting the catalyst device from excessive heat should not be necessary. Nevertheless, for safety purposes, the use of the flame arrester material for the container 42 to prevent any flame from igniting gas within the cell housing is believed to provide a safety margin for the unforeseen event of excess gas. The micro-pores in the catalyst container 42 are also believed to act as a throttle on the rate of recombination should there be an excess of recombinable gasses. As the rate of gas production increases, the rate of recombination of H₂/O₂ to water vapor and the rate of transport of the vapor through the pores in the catalyst container 42 will increase. This in turn will slow the rate of gas passing through the same pores thereby controlling the rate of recombination.

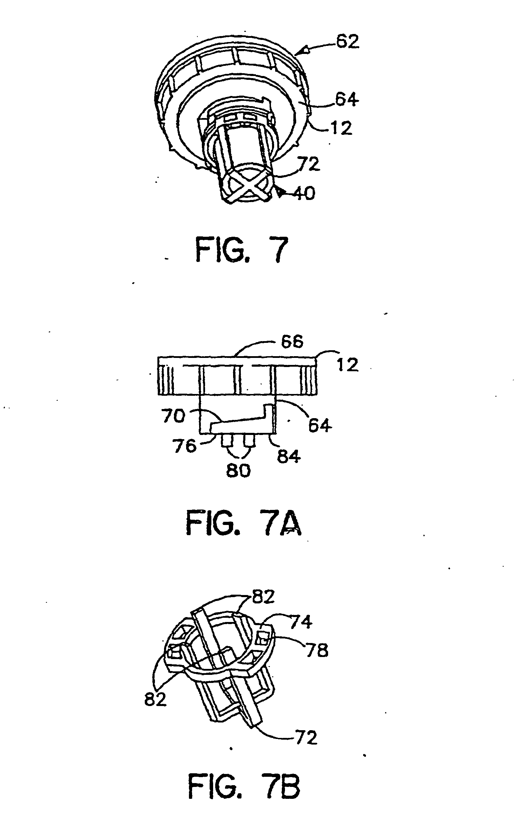

The catalyst device 40 is combined preferably with a pressure relief valve 12 (also termed a vent assembly) for easy insertion into and removal from the battery housing 10. Illustrated in Figures 7, 7A, and 7B is one embodiment of such a vent assembly 62. The assembly 62 includes a pressure relief valve 12 which, as known in the art, includes a vent body 64, a top cap 66 having openings through which the gas can vent, and a pressure relief valve member (not shown) within the body 64 which releases excess gas as necessary to prevent over pressurization within the cell housing 10, but which prevents gas from outside the housing from entering. Pressure relief valves for use in VRLA cells are known in the art and have means for sealingly closing a vent hole in the housing of a VRLA cell such as the standard quarter turn bayonet fitting 70.

In the present embodiment, vent body 64 has means for supporting the catalyst device 40. Fixed to the bottom of the vent body 64 is a catalyst cage 72 in which the catalyst device 40 is supported to be in gas communication with the gas space 26 within the housing 10 when the vent assembly 62 is secured in the vent hole of the housing 10 (see Figure 5). Formed at the upper portion of the cage 72 is a flange 74 that mates to a flange 76 formed on the underside of the valve body 64. Openings 78 in the cage flange 74 engage mating pins 80 formed on the flange 76.

To assemble the vent assembly 62, the catalyst device 40 is fitted into the cage 72 after which the cage flange 74 is mated to the flange 76 of the vent body 64 such that the mating pins 80 project through the openings 78. Extensions 82 on the cage 72 fit into an opening 84 on the underside of the vent body 64 to help guide and align the cage 72 to the vent body. The mating pins 80 are then heat-staked i.e., deformed using heat, or welded ultrasonically to secure the cage 72 in place. Suitable materials for the valve body such as high-density polyethylene and polypropylene allow easy heat-staking of the pins 80. A preferred material for the cage 72 is polypropylene. It is understood that the catalyst device 40 does not seal against the opening 84, but allows the venting of gas through the opening 84 into the vent body 64 where it can be released as necessary.

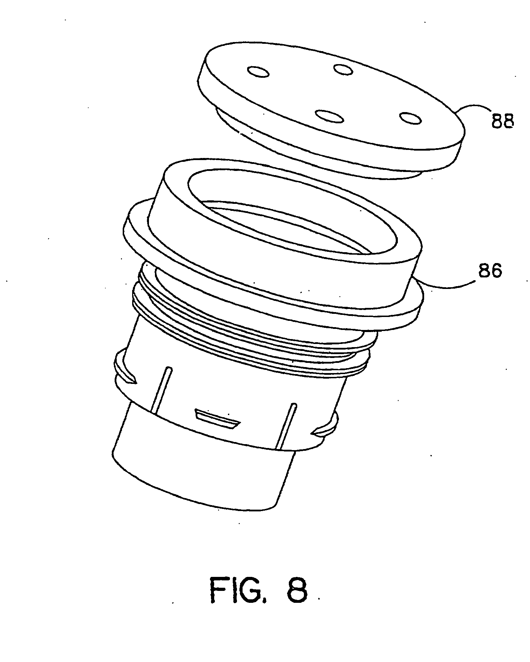

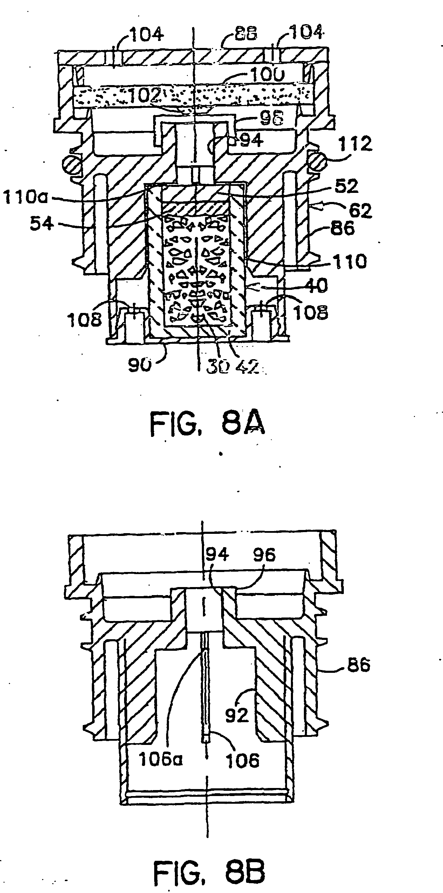

Another embodiment of a combined pressure relief valve/catalyst vent assembly 62 is illustrated with reference to Figures 8, 8A, and 8B. The vent assembly 62 comprises a pressure relief valve 12 having a vent body 86, a top cap 88 fixed to the body 86 through known means such as snapping, adhesives, welding, etc. and a retainer 90 formed as a cap fixed to the bottom side of the body 86 in a similar manner. As seen in Figures 8A and 8B, the vent body 86 has a cylindrical recess 92 in which the catalyst device 40 fits and a cylindrical gas channel 94 having a neck 96 through which the excess gas exits the cell housing 10 to relieve over pressurization.

Seated around the neck 96 is the pressure relief valve member 98 formed as a cylindrical cup valve. The valve 98 closes the opening in the neck 96 in normal conditions, but opens when the internal pressure within the cell exceeds a specific limit, which is at about 3 p.s.i.g. (1247 g/cm²) in the illustrated embodiment. It reseals once the excess gas is released. Positioned above the valve member 98 is an anti-flame disk 100 formed of micro-porous plastic material which allows gas, but not flames to travel therethrough. The underside of the anti-flame disk 100 has a projection 102 positioned to act as a stop for the valve member 98. The top cap 88 includes vent holes 104 through which the gas released by valve member 98 can vent.

Within the body recess 92 is positioned the catalyst device container 40 as described previously with reference to Figure 6. Three extension fins 106 spaced around the wall defining the cylindrical recess 92 maintain a space 110 between the catalyst container 40 and the wall. Likewise, lips 106a spaced around the wall act as stops to maintain a space 110a. Spaces 110 and 110a allow the gas within the sealed housing 10 to flow past the catalyst device 40 to the gas conduit 94 where, if necessary the gas can be released through the valve member 98. The retainer 90 has multiple openings 108 through which gas can travel to and from the catalyst container 40 as well as to the valve member 98 for venting as necessary.

The vent body 86, molded from high density polyethylene (HDPE) or other suitable material forms a suitable fitting to fit a standard DIN opening in a sealed battery housing as known in the art, it being understood that the housing can be formed to fit any type of opening. An O-ring 112 of VITON provides a good seal between the body 86 and the sealed housing 10 of the battery cell.

It is understood that the above-identified arrangements are merely illustrative of the many possible specific embodiments which represent applications of the present invention. Numerous and varied other arrangements can readily be devised in accordance with the principles of the invention without departing from the scope of the invention as defined by the appended claims.

## Claims

1. An electric cell comprising:
a sealed housing (10);
a positive electrode (14) positioned in the housing (10);
a negative electrode (16) positioned in the housing (10) in spaced relationship from the positive electrode (14);
an electrolyte (20) in said housing (10) in contact with said positive (14) and negative (16) electrodes;
a gas space (26) within said housing (10);
a pressure relief valve (12) which allows gas to escape from the housing (10) and which prevents oxygen gas from outside the housing (10) to contact said negative electrode (16);
a gas-permeable catalyst container (42) in gas communication with said gas space (26), said container comprising a flame arresting material having pores of suitable size to permit gas to pass therethrough while being a barrier to a flame, said container (42) being encased in a gas-permeable hydrophobic coating (56) which prevents water from passing therethrough; and
a catalyst (30) arranged in said catalyst container for converting oxygen gas and hydrogen gas which is generated in the housing (10) to water vapor.

2. An electrical cell in accordance with claim 1 further comprising:
means for charging the cell at a charge voltage having a value which is slightly in excess of the value of the open-circuit voltage of the cell.

3. A cell according to claim 1 wherein said electrolyte (20) is an immobilized electrolyte suitable for lead-acid cells.

4. A cell according to any preceding claim, wherein said catalyst container (42) is secured to said relief valve (12) to be removable from the housing (10) with said relief valve (12).

5. A cell according to any preceding claim wherein said hydrophobic coating (56) comprises PTFE.

6. A cell according to claim 5 wherein said hydrophobic coating (56) is formed by a film of PTFE.

7. A device (40) for recombining gases in a storage battery; comprising:
a gas-permeable catalyst container (42), said container comprising a flame arresting material having pores of suitable size to permit gas to pass therethrough and which acts as a barrier to a flame;
a catalyst (30) for recombining gases arranged within said container (42); and
a gas-permeable hydrophobic coating (56) which prevents water from passing therethrough encasing said container (42).

8. A device (40) in accordance with claim 7 wherein said container 42 comprises a ceramic material.

9. A device (40) in accordance with claim 7 or claim 8 wherein said hydrophobic coating (56) comprises a film of PTFE.

10. A device (40) in accordance with claim 9 wherein said film has a thickness in the range of about .051 mm to .076 mm (.002 inches to .003 inches).

11. A device (40) in accordance with claim 9 or claim 10 wherein said film has a pore size of about .22 microns.

12. A device (40) in accordance with claim 8 wherein said hydrophobic coating (56) is formed by soaking said container (42) in a PTFE solution.

13. A device (40) in accordance with any claim of claims 7 to 11 wherein said hydrophobic coating comprises a film of PTFE.

14. A device (40) in accordance with any claim of claims 7 to 13 wherein said container (42) has an opening (50) at an end of said vessel through which the catalyst (30) is added, said opening being sealed closed with an epoxy.

15. A device (40) in accordance with any claim of claims 9 to 11 having four layers of said film.

16. A device (40) for recombining gases in a storage battery; comprising:
a gas-permeable catalyst container (42), said container being formed of a flame arresting material having pores of suitable size to permit gas to pass therethrough and which acts as a barrier to a flame;
a catalyst (30) for recombining gases arranged within said container (42); and
a PTFE gas-permeable hydrophobic encasement (56) of said container (42) which prevents water from passing therethrough.

17. A vent assembly (12) for sealing a valve regulated lead-acid battery cell having a sealed housing (10) and a gas space (26) within said housing, said device (12) comprising:
a vent body (64) through which gas from inside the housing (10) can vent to outside the housing;
a pressure relief valve member (98) within said vent body (64) to allow excess gas to escape from the housing (10) and which prevents gas outside the housing from entering the housing;
a gas-permeable catalyst container (42) supported on said body (64) to be in gas communication with said gas space (26) when said vent assembly (12) seals the battery cell, said catalyst container (42) comprising a flame arresting material having pores of suitable size to permit gas to pass therethrough while being a barrier to a flame, said container being encased in a gas-permeable hydrophobic coating (56) which prevents water from passing therethrough; and
a catalyst (30) arranged in said catalyst container (42) for recombining oxygen gas and hydrogen gas generated in the cell to water vapor.

18. An assembly (12) in accordance with claim 17 further comprising a cage (72) secured to said body (64) for supporting said catalyst container (42), said catalyst container (42) fitting within said cage.

19. An assembly (12) in accordance with claim 17 wherein said gas-permeable hydrophobic coating (56) comprises PTFE.

20. An assembly (12) in accordance with claim 17 wherein said vent body (64) has a recess (92) in which said catalyst container (42) is supported and a retainer (90) fixed to said vent body for securing said catalyst container within said recess.

21. An assembly (12) in accordance with claim 18 wherein said cage (72) includes openings (78), and said vent body (64) includes mating pins (80) extending into said openings.

22. An assembly (12) in accordance with claim 21 wherein said mating pins (80) are heat staked to secure said cage (72) to said vent body (64).

23. An assembly (12) in accordance with any claim of claims 17 to 22 wherein said hydrophobic coating comprises a film of PTFE.

24. A vent assembly (12) for sealing a valve regulated lead-acid battery cell having a sealed housing (10) which includes electrolyte (20) and a gas space (26) within said housing, said assembly comprising:
a vent body (64) through which gas from inside the housing (10) can vent to outside the housing, said vent body having a top and a bottom;
a pressure relief valve member (98) within said vent body to allow excess gas to escape from the housing;
a gas-permeable catalyst container (42) comprising a flame arresting material having pores of suitable size to permit gas to pass there trough while acting as a barrier to a flame, said container (42) being encased in a gas permeable hydrophobic coating (56) which prevents water from passing theretrough, said coating comprising a film of PTFE; and
a catalyst (30) positioned within said container (42) to be in communication with said gas space when said vent assembly seals said battery cell.

25. A vent assembly (12) according to claim 24 wherein said film is a seal tape.

26. A vent assembly (12) according to claim 24 wherein said pores are provided in a wall (44) of said container (42).

27. A vent assembly (12) of any claim of claims 24 to 26 further comprising a cage (72) fixed to the bottom of said vent body (64), said catalyst container fitting within said cage.

## Patentansprüche

1. Elektrische Zelle, umfassend:
ein geschlossenes Gehäuse (10);
eine im Gehäuse (10) angeordnete positive Elektrode (14);
eine in Abstandsbeziehung von der positiven Elektrode (14) im Gehäuse (10) angeordnete negative Elektrode (16);
einen Elektrolyten (20) im Gehäuse (10) in Kontakt mit der positiven (14) und negativen (16) Elektrode;
einen Gasraum (26) innerhalb des Gehäuses (10);
ein Druckentlastungsventil (12), das Gas aus dem Gehäuse (10) entweichen lässt und das verhindert, dass Sauerstoff-Gas von außerhalb des Gehäuses (10) mit der negativen Elektrode (16) in Kontakt kommt;
einen gasdurchlässigen Katalysatorbehälter (42) in Gasverbindung mit dem Gasraum (26), wobei der Behälter ein Flammensperrmaterial umfasst, das Poren von geeigneter Größe aufweist, um Gas hindurchtreten zu lassen, während es eine Sperre für eine Flamme ist, wobei der Behälter (42) in einem gasdurchlässigen hydrophoben Überzug (56) eingeschlossen ist, der verhindert, dass Wasser hindurchtritt; und
einen im Katalysatorbehälter angeordneten Katalysator (30) zum Umwandeln von Sauerstoff-Gas und Wasserstoff-Gas, das im Gehäuse (10) erzeugt wird, in Wasserdampf.

2. Elektrische Zelle nach Anspruch 1, weiter umfassend:
Mittel zum Aufladen der Zelle mit einer Ladespannung, die einen Wert besitzt, der den Wert der Leerlauf-Spannung der Zelle leicht übersteigt.

3. Zelle nach Anspruch 1, bei welcher der Elektrolyt (20) ein für Blei-Säure-Zellen geeigneter unbeweglich gemachter Elektrolyt ist.

4. Zelle nach einem beliebigen vorangehenden Anspruch, bei welcher der Katalysatorbehälter (42) am Entlastungsventil (12) befestigt ist, um sich mit dem Entlastungsventil (12) aus dem Gehäuse (10) entfernen zu lassen.

5. Zelle nach einem beliebigen vorangehenden Anspruch, bei welcher der hydrophobe Überzug (56) PTFE umfasst.

6. Zelle nach Anspruch 5, bei welcher der hydrophobe Überzug (56) von einem PTFE-Film gebildet wird.

7. Vorrichtung (40) zum Rekombinieren von Gasen in einer Speicherbatterie, umfassend:
einen gasdurchlässigen Katalysatorbehälter (42), wobei der Behälter ein Flammensperrmaterial umfasst, das Poren von geeigneter Größe aufweist, um Gas hindurchtreten zu lassen, und das als Sperre für eine Flamme wirkt;
einen innerhalb des Behälters (42) angeordneten Katalysator (30) zum Rekombinieren von Gasen; und
einen den Behälter (42) umschließenden gasdurchlässigen hydrophoben Überzug (56), der verhindert, dass Wasser hindurchtritt.

8. Vorrichtung (40) nach Anspruch 7, bei welcher der Behälter (42) ein Keramikmaterial umfasst.

9. Vorrichtung (40) nach Anspruch 7 oder Anspruch 8, bei welcher der hydrophobe Überzug (56) einen PTFE-Film umfasst.

10. Vorrichtung (40) nach Anspruch 9, bei welcher der Film eine Dicke im Bereich von etwa 0,051 mm bis 0,076 mm (0,002 Inches bis 0,003 Inches) aufweist.

11. Vorrichtung (40) nach Anspruch 9 oder Anspruch 10, bei welcher der Film eine Porengröße von etwa 0,22 Mikron aufweist.

12. Vorrichtung (40) nach Anspruch 8, bei welcher der hydrophobe Überzug (56) durch Tränken des Behälters (42) in einer PTFE-Lösung gebildet wird.

13. Vorrichtung (40) nach einem beliebigen Anspruch der Ansprüche 7 bis 11, bei welcher der hydrophobe Überzug einen PTFE-Film umfasst.

14. Vorrichtung (40) nach einem beliebigen Anspruch der Ansprüche 7 bis 13, bei welcher der Behälter (42) eine Öffnung (50) an einem Ende des Behälters aufweist, durch die der Katalysator (30) hinzugefügt wird, wobei die Öffnung mit einem Epoxydharz versiegelt ist.

15. Vorrichtung (40) nach einem beliebigen Anspruch der Ansprüche 9 bis 11, die vier Schichten des Films aufweist.

16. Vorrichtung (40) zum Rekombinieren von Gasen in einer Speicherbatterie, umfassend:
einen gasdurchlässigen Katalysatorbehälter (42), wobei der Behälter von einem Flammensperrmaterial gebildet wird, das Poren von geeigneter Größe aufweist, um Gas hindurchtreten zu lassen, und das als Sperre für eine Flamme wirkt;
einen innerhalb des Behälters (42) angeordneten Katalysator (30) zum Rekombinieren von Gasen; und
eine gasdurchlässige hydrophobe PTFE-Ummantelung (56) des Behälters (42), die verhindert, dass Wasser hindurchtritt.

17. Entlüftungsanordnung (12) zum Abdichten einer ventilgeregelten Blei-Säure-Batterie-Zelle, die ein geschlossenes Gehäuse (10) und einen Gasraum (26) innerhalb des Gehäuses aufweist, wobei die Vorrichtung (12) umfasst:
einen Entlüftungskörper (64), durch den Gas aus dem Inneren des Gehäuses (10) zur Außenseite des Gehäuses entlüften kann;
ein Druckentlastungsventilglied (98) innerhalb des Ventilkörpers (64), um überschüssiges Gas aus dem Gehäuse (10) entweichen zu lassen, und das verhindert, dass Gas außerhalb des Gehäuses in das Gehäuse eintritt;
einen gasdurchlässigen Katalysatorbehälter (42), der vom Körper (64) gehalten wird, um sich in Gasverbindung mit dem Gasraum (26) zu befinden, wenn die Entlüftungsanordnung (12) die Batterie-Zelle abdichtet, wobei der Katalysatorbehälter (42) ein Flammensperrmaterial umfasst, das Poren von geeigneter Größe aufweist, um Gas hindurchtreten zu lassen, während es eine Sperre für eine Flamme ist, wobei der Behälter in einem gasdurchlässigen hydrophoben Überzug (56) eingeschlossen ist, der verhindert, dass Wasser hindurchtritt; und
einen im Katalysatorbehälter (42) angeordneten Katalysator (30) zum Rekombinieren von in der Zelle erzeugtem Sauerstoff-Gas und Wasserstoff-Gas zu Wasserdampf.

18. Anordnung (12) nach Anspruch 17, weiter umfassend einen am Körper (64) befestigten Käfig (72) zum Halten des Katalysatorbehälters (42), wobei der Katalysatorbehälter (42) in den Käfig passt.

19. Anordnung (12) nach Anspruch 17, bei welcher der gasdurchlässige hydrophobe Überzug (56) PTFE umfasst.

20. Anordnung (12) nach Anspruch 17, bei welcher der Entlüftungskörper (64) eine Ausnehmung (92) aufweist, in welcher der Katalysatorbehälter (42) gehalten wird, sowie eine am Entlüftungskörper befestigte Rückhaltevorrichtung (90) zum Befestigen des Katalysatorbehälters innerhalb der Vertiefung.

21. Anordnung (12) nach Anspruch 18, bei welcher der Käfig (72) Öffnungen (78) enthält, und der Belüftungskörper (64) Paarungsbolzen (80) einschließt, die sich in die Öffnungen erstrecken.

22. Anordnung (12) nach Anspruch 21, bei welcher die Paarungsbolzen (80) wärmeverstemmt sind, um den Käfig (72) am Entlüftungskörper (64) zu befestigen.

23. Anordnung (12) nach einem beliebigen Anspruch der Ansprüche 17 bis 22, bei welcher der hydrophobe Überzug einen PTFE-Film umfasst.

24. Entlüftungsanordnung (12) zum Abdichten einer ventilgeregelten Blei-Säure-Batterie-Zelle, die ein geschlossenes Gehäuse (10) aufweist, das Elektrolyt (20) und einen Gasraum (26) innerhalb des Gehäuses enthält, wobei die Anordnung umfasst:
einen Entlüftungskörper (64), durch den Gas aus dem Inneren des Gehäuses (10) zur Außenseite des Gehäuses entlüften kann, wobei der Entlüftungskörper ein oberes und ein unteres Ende aufweist;
ein Druckentlastungsventilglied (98) innerhalb des Ventilkörpers, um überschüssiges Gas aus dem Gehäuse entweichen zu lassen;
einen gasdurchlässigen Katalysatorbehälter (42), umfassend ein Flammensperrmaterial, das Poren von geeigneter Größe aufweist, um Gas hindurchtreten zu lassen, während es als Sperre für eine Flamme wirkt, wobei der Behälter (42) in einem gasdurchlässigen hydrophoben Überzug (56) eingeschlossen ist, der verhindert, dass Wasser hindurchtritt, wobei der Überzug einen PTFE-Film umfasst; und
einen Katalysator (30), der innerhalb des Behälters (42) angeordnet ist, um sich in Verbindung mit dem Gasraum zu befinden, wenn die Entlüftungsanordnung die Batterie-Zelle abdichtet.

25. Entlüftungsanordnung (12) nach Anspruch 24, bei welcher der Film ein Dichtungsband ist.

26. Entlüftungsanordnung (12) nach Anspruch 24, bei welcher die Poren in einer Wand (44) des Behälters (42) vorgesehen sind.

27. Entlüftungsanordnung (12) nach einem beliebigen Anspruch der Ansprüche 24 bis 26, weiter umfassend einen am unteren Ende des Entlüftungskörpers (64) befestigten Käfig (72), wobei der Katalysatorbehälter in den Käfig passt.

## Revendications

1. Elément électrique comprenant :
un boîtier scellé (10) ;
une électrode positive (14) positionnée dans le boîtier (10) ;
une électrode négative (16) positionnée dans le boîtier (10) en relation espacée par rapport à l'électrode positive (14) ;
un électrolyte (20) dans ledit boîtier (10) en contact avec lesdites électrodes positive (14) et négative (16) ;
un espace de gaz (26) à l'intérieur dudit boîtier (10) ;
une soupape de décharge (12) qui permet au gaz de s'échapper du boîtier (10) et qui empêche l'oxygène gazeux provenant de l'extérieur du boîtier (10) de venir au contact de ladite électrode négative (16) ;
un récipient de catalyseur perméable aux gaz (42) en communication gazeuse avec ledit espace de gaz (26), ledit récipient comprenant un matériau pare-flamme ayant des pores de taille convenable pour permettre au gaz de le traverser tout en formant une barrière aux flammes, ledit récipient (42) étant enrobé d'un revêtement hydrophobe perméable aux gaz (56) qui empêche l'eau de le traverser ; et
un catalyseur (30) disposé dans ledit récipient de catalyseur pour convertir l'oxygène gazeux et l'hydrogène gazeux qui est généré dans le boîtier (10) en vapeur d'eau.

2. Elément électrique selon la revendication 1, comprenant en outre :
des moyens pour charger l'élément à une tension de charge ayant une valeur qui est légèrement supérieure à la valeur de la tension en circuit ouvert de l'élément.

3. Elément selon la revendication 1, dans lequel ledit électrolyte (20) est un électrolyte immobilisé convenant pour des éléments au plomb-acide.

4. Elément selon l'une quelconque des revendications précédentes, dans lequel ledit récipient de catalyseur (42) est fixé à ladite soupape de décharge (12) de façon à pouvoir être retiré du boîtier (10) avec ladite soupape de décharge (12).

5. Elément selon l'une quelconque des revendications précédentes, dans lequel ledit revêtement hydrophobe (56) comprend du PTFE.

6. Elément selon la revendication 5, dans lequel ledit revêtement hydrophobe (56) est formé par un film de PTFE.

7. Dispositif (40) pour recombiner des gaz dans une batterie de stockage, comprenant :
un récipient de catalyseur perméable aux gaz (42), ledit récipient comprenant un matériau pare-flamme ayant des pores de taille convenable pour permettre au gaz de le traverser et qui agit comme une barrière aux flammes ;
un catalyseur (30) pour recombiner les gaz disposé à l'intérieur dudit récipient (42) ; et
un revêtement hydrophobe perméable aux gaz (56) qui empêche l'eau traverser ledit récipient (42) en enrobant celui-ci.

8. Dispositif (40) selon la revendication 7, dans lequel ledit récipient (42) comprend un matériau céramique.

9. Dispositif (40) selon la revendication 7 ou la revendication 8, dans lequel ledit revêtement hydrophobe (56) comprend un film de PTFE.

10. Dispositif (40) selon la revendication 9, dans lequel ledit film a une épaisseur située dans la plage allant d'environ 0,051 mm à 0,076 mm (0,002 pouce à 0,003 pouce).

11. Dispositif (40) selon la revendication 9 ou la revendication 10, dans lequel ledit film a une taille de pores d'environ 0,22 micromètre.

12. Dispositif (40) selon la revendication 8, dans lequel ledit revêtement hydrophobe (56) est formé par immersion dudit récipient (42) dans une solution de PTFE.

13. Dispositif (40) selon l'une quelconque des revendications 7 à 11, dans lequel ledit revêtement hydrophobe comprend un film de PTFE.

14. Dispositif (40) selon l'une quelconque des revendications 7 à 13, dans lequel ledit récipient (42) a une ouverture (50) à une extrémité dudit récipient à travers laquelle le catalyseur (30) est ajouté, ladite ouverture étant fermée hermétiquement avec un composé époxy.

15. Dispositif (40) selon l'une quelconque des revendications 9 à 11, ayant quatre couches dudit film.

16. Dispositif (40) pour recombiner des gaz dans une batterie de stockage, comprenant :
un récipient de catalyseur perméable aux gaz (42), ledit récipient comprenant un matériau pare-flamme ayant des pores de taille convenable pour permettre au gaz de le traverser et qui agit comme une barrière aux flammes ;
un catalyseur (30) pour recombiner les gaz disposé à l'intérieur dudit récipient (42) ; et
une enceinte hydrophobe perméable aux gaz en PTFE (56) dudit récipient (42) qui empêche l'eau de le traverser.

17. Assemblage d'aération (12) pour sceller un élément de batterie au plomb-acide régulé par une soupape ayant un boîtier scellé (10) et un espace de gaz (26) à l'intérieur dudit boîtier, ledit dispositif (12) comprenant :
un corps d'aération (64) par l'intermédiaire duquel un gaz provenant de l'intérieur du boîtier (10) peut être aéré vers l'extérieur du boîtier ;
un élément de soupape de décharge (98) à l'intérieur dudit corps d'aération (64) pour permettre au gaz en excès de s'échapper du boîtier (10) et qui empêche le gaz à l'extérieur du boîtier d'entrer dans le boîtier ;
un récipient de catalyseur perméable aux gaz (42) supporté sur ledit corps (64) pour être en communication de gaz avec ledit espace de gaz (26) quand ledit assemblage d'aération (12) scelle l'élément de batterie, ledit récipient de catalyseur (42) comprenant un matériau pare-flamme ayant des pores de taille convenable pour permettre au gaz de le traverser tout en formant une barrière aux flammes, ledit récipient étant enrobé d'un revêtement hydrophobe perméable aux gaz (56) qui empêche l'eau de le traverser ; et
un catalyseur (30) disposé dans ledit récipient de catalyseur (42) pour convertir l'oxygène gazeux et l'hydrogène gazeux qui est généré dans l'élément en vapeur d'eau.

18. Assemblage (12) selon la revendication 17, comprenant en outre une cage (72) fixée audit corps (64) pour supporter ledit récipient de catalyseur (42), ledit récipient de catalyseur (42) s'ajustant à l'intérieur de ladite cage.

19. Assemblage (12) selon la revendication 17, dans lequel ledit revêtement hydrophobe perméable aux gaz (56) comprend du PTFE.

20. Assemblage (12) selon la revendication 17, dans lequel ledit corps d'aération (64) a un évidement (92) dans lequel ledit récipient de catalyseur (42) est supporté et un système de fixation (90) fixé audit corps d'aération pour assujettir ledit récipient de catalyseur à l'intérieur dudit évidement.

21. Assemblage (12) selon la revendication 18, dans lequel ladite cage (72) comprend des ouvertures (78), et ledit corps d'aération (64) comprend des broches d'appariement (80) s'étendant dans lesdites ouvertures.

22. Assemblage (12) selon la revendication 21, dans lequel lesdites broches d'appariement (80) sont piquées à la chaleur pour fixer ladite cage (72) audit corps d'aération (64).

23. Assemblage (12) selon l'une quelconque des revendications 17 à 22, dans lequel ledit revêtement hydrophobe comprend un film de PTFE.

24. Assemblage d'aération (12) pour sceller un élément de batterie au plomb-acide régulé par une soupape ayant un boîtier scellé (10) qui comprend un électrolyte (20) et un espace de gaz (26) à l'intérieur dudit boîtier, ledit assemblage comprenant :
un corps d'aération (64) par l'intermédiaire duquel le gaz provenant de l'intérieur du boîtier (10) peut être aéré vers l'extérieur du boîtier, ledit corps d'aération ayant un sommet et un fond ;
un élément de soupape de décharge (98) à l'intérieur dudit corps d'aération pour permettre au gaz en excès de s'échapper du boîtier ;
un récipient de catalyseur perméable aux gaz (42) comprenant un matériau pare-flamme ayant des pores de taille convenable pour permettre au gaz de le traverser tout en formant une barrière aux flammes, ledit récipient (42) étant enrobé d'un revêtement hydrophobe perméable aux gaz (56) qui empêche l'eau de le traverser, ledit revêtement comprenant un film de PTFE ; et
un catalyseur (30) disposé à l'intérieur dudit récipient (42) pour être en communication avec ledit espace de gaz quand ledit assemblage d'aération scelle ledit élément de batterie.

25. Assemblage d'aération (12) selon la revendication 24, dans lequel ledit film est une bande d'étanchéité.

26. Assemblage d'aération (12) selon la revendication 24, dans lequel lesdits pores sont disposés dans une paroi (44) dudit récipient (42).

27. Assemblage d'aération (12) selon l'une quelconque des revendications 24 à 26, comprenant en outre une cage (72) fixée au fond dudit corps d'aération (64), ledit récipient de catalyseur s'ajustant à l'intérieur de ladite cage.
